# FASCICULE DE BREVET EUROPEEN

(11) **EP 1 722 206 B1**
(45) Date de publication et mention de la délivrance du brevet: **22.07.2009**
(21) Numéro de dépôt: 05360018.5
(22) Date de dépôt: 13.05.2005
(51) Int. Cl.: G01J 5/00, G01J 5/04, G08B 13/19

(54) **Détecteur de passage à zone de détection réglable**
Bewegungssensor mit einstellbarem Detektionsbereich
Movement sensor with adjustable detection zone

(43) Date de publication de la demande: 15.11.2006
(73) Titulaire: AB Plast S.r.l., 25018 Montichiari (IT)
(72) Inventeur: Schultschik, Ditmar, 9241 Wernberg (AT); Walder, Mario, 9562 Himmelberg (AT); Warum, Wolfgang, 9500 Villach (AT); Demuth, Jürgen, 9241 Wernberg (AT); Modliba, Thomas, 9020 Klagenfurt (AT); Gosch, Peter, 9073 Klagenfurt-Viktring (AT); Piber, Ewald, 9241 Wernberg (AT); Wagner, Wolfgang, 9500 Villach (AT)
(74) Mandataire: Nuss, Pierre

(56) Documents cités:
- EP-A- 0 177 130
- WO-A-96/33435
- DE-A1- 3 710 561
- DE-U1- 9 010 896
- US-A- 5 013 166
- US-A- 5 966 074
- US-A1- 2003 193 397
- US-A1- 2005 029 458

## Description

La présente invention concerne le domaine des appareillages pour l'automatisation du confort dans l'habitat et le tertiaire, à savoir notamment la lumière, le chauffage, la climatisation et l'alarme, au moyen de dispositifs permettant une détection de passage de personnes, et a pour objet un détecteur de passage à zone de détection réglable.

Les capteurs connus de ce type utilisent un dispositif optique, dans lequel les signaux incidents sont orientés vers un ou des capteurs infrarouges, qui délivrent un signal de commande d'un appareillage en aval, tel qu'un dispositif d'éclairage, de chauffage, d'alarme ou autre.

On connaît ainsi, par WO-A-9633435 et par WO-A-9802856 des détecteurs de ce type, dans lesquels les capteurs présentent des angles de détection prédéterminés pouvant être compris entre 90° et 180°.

D'autres capteurs sont décrits par US 2005/02948, US-A-5966074, DE 3710561 et EP-A-0177130.

Ces détecteurs ne présentent, cependant, pas de moyen intégré permettant de réduire ou limiter la zone de détection. A cet effet, il est généralement mis en oeuvre des éléments obturateurs, qui sont rajoutés par collage ou déformation élastique sur leur face externe. Toutefois, ces éléments obturateurs présentent l'inconvénient de nuire à l'esthétique de la face externe des détecteurs. En outre, ces éléments obturateurs peuvent se détacher du détecteur, de sorte que la définition de la zone de détection devient peu fiable.

Il en résulte que la détermination précise d'une zone de détection désirée nécessite d'ajouter une ou des pièces supplémentaires au détecteur, ce qui entraîne des opérations correspondantes supplémentaires de montage et différents essais de mise au point. Une utilisation du détecteur dans une configuration différente implique alors une réorganisation de la disposition du ou des éléments d'obturation et/ou de retirer ou rajouter d'autres éléments d'obturation.

La présente invention a pour but de pallier ces inconvénients en proposant un détecteur de passage à zone de détection réglable permettant un paramétrage rapide facile et précis de l'angle de détection

A cet effet, le détecteur de passage conforme à l'invention comprend les caractéristiques mentionnées dans la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un détecteur conforme à l'invention, monté dans un carter, dont la face avant est déposée ;
la figure 2 est une vue analogue à la figure 1 du détecteur en état de fonctionnement ;
la figure 3 est une vue éclatée en perspective du détecteur seul ;
la figure 4 est une vue en perspective du détecteur assemblé avant montage dans son carter.

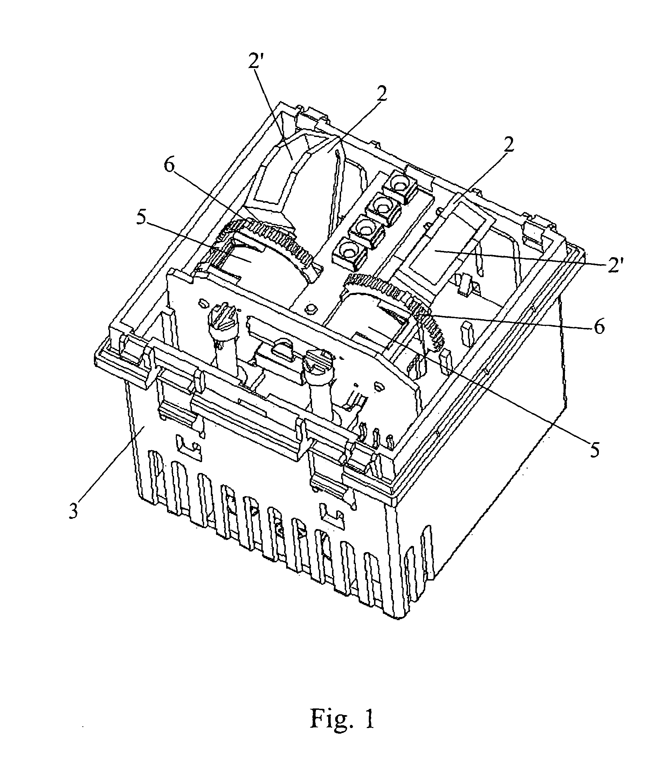

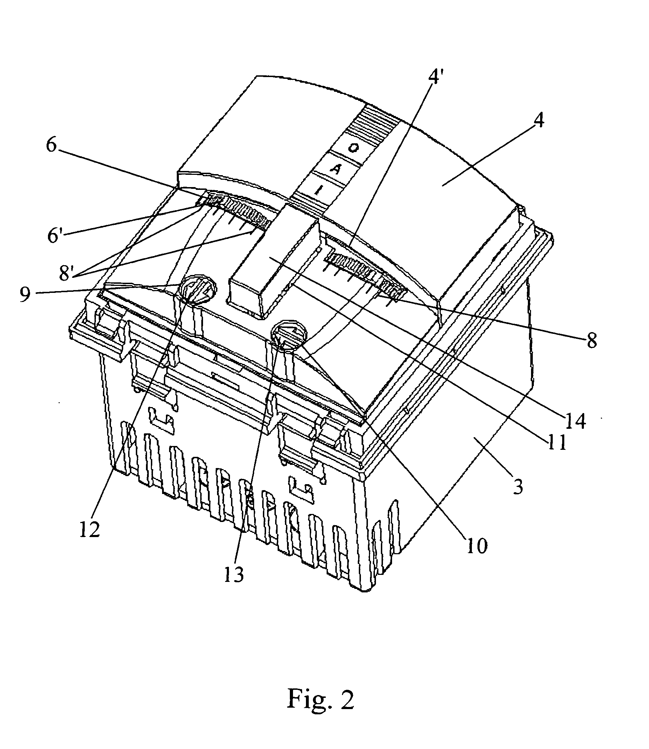

Les figures 1 à 4 des dessins annexés représentent un détecteur de passage, qui est essentiellement constitué par au moins un capteur infrarouge 1 coopérant avec un dispositif optique 2 de focalisation de radiations électromagnétiques, muni d'une ouverture 2' de réception desdites radiations électromagnétiques. Dans le mode de réalisation préférentiel représenté aux figures 1 et 2 des dessins annexés, le détecteur comprend deux capteurs infrarouges 1 coopérant chacun avec un dispositif optique 2, les ensembles ainsi constitués étant montés dans un carter 3 fermé par une face avant 4.

Conformément à l'invention, le dispositif optique 2 est relié au capteur 1 par l'intermédiaire d'un palier 5 de guidage en rotation et est pourvu d'un moyen 6 d'actionnement en rotation dans ledit palier 5.

De préférence, le capteur 1 est intégré, par sa face opposée à celle tournée vers le dispositif optique 2, dans un circuit imprimé (non représenté) monté sur le fond du carter 3 de réception du capteur 1 et du dispositif optique 2 et le palier 5 de guidage en rotation du dispositif optique 2 est fixé sur ledit circuit imprimé.

Le palier 5 de guidage en rotation du dispositif optique 2 est réalisé sous forme de deux demi-coquilles identiques pouvant être assemblées par l'intermédiaire de dispositifs à encliquetage élastiquement déformables, ces demi-coquilles enserrant, d'une part, sans possibilité de rotation, le capteur 1 et, d'autre part, avec possibilité de rotation, un disque de guidage 7 solidaire de l'extrémité correspondante du dispositif optique 2. Ainsi, il est possible, le capteur 1 et le palier 5 de guidage en rotation du dispositif optique 2 étant solidarisés avec le circuit imprimé monté dans le fond du carter 3, de réaliser une rotation du dispositif optique 2 en vue du positionnement de son ouverture 2' par rapport à la face avant 4 du carter 3, par rotation du disque de guidage 7 dans le palier 5 de guidage en rotation.

Le moyen 6 d'actionnement en rotation du dispositif optique 2 dans ledit palier 5 est avantageusement réalisé sous forme d'un secteur circulaire monté sur le dispositif optique, près du palier 5 de guidage en rotation, ce secteur circulaire étant muni au milieu de son bord d'un marquage 6' destiné à être positionné par rapport à des marquages 8 prévus dans une fente de passage 4' ménagée dans la face avant 4 du carter 3, ces marquages 8 étant décalés entre eux d'une valeur angulaire prédéterminée, l'angle entre les marquages extrêmes 8' correspondants au débattement angulaire maximum du dispositif optique 2. Afin de limiter l'angle de rotation du dispositif optique 2, il est prévu, selon une autre caractéristique de l'invention, deux butées (non représentées) coopérant avec le dispositif optique 2 ou avec le moyen 6 d'actionnement en rotation, ces butées étant disposées dans le carter 3.

Ainsi, il est possible d'effectuer un réglage de position précis et rapide du dispositif optique 2 et de vérifier immédiatement l'angle de pivotement de ce dernier et donc le champ de détection obtenu.

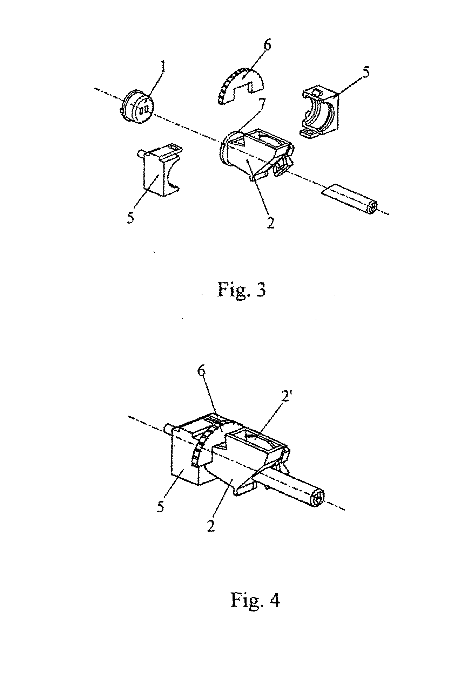

Selon une variante de réalisation de l'invention, il est également possible de réaliser le moyen 6 d'actionnement en rotation du dispositif optique 2 sous forme d'un axe de réglage solidarisé avec le dispositif optique 2 du côté opposé au disque de guidage 7, l'extrémité libre de cet axe de réglage traversant, en position de service, une face du carter 3 de réception de l'ensemble capteur 1 et dispositif optique 2 et étant actionnable, par exemple par l'intermédiaire d'un tournevis coopérant avec une fente prévue à cet effet dans l'extrémité libre dudit axe de réglage. Un tel axe de réglage est représenté sur les figures 3 et 4 des dessins annexés, sans être affecté d'un numéro de référence.

De manière connue, la face avant 4 de fermeture du carter 3 est pourvue, en outre, d'ouvertures 9 à 11 de passage, respectivement d'un bouton 12 de réglage de luminosité, d'un bouton 13 de réglage de la temporisation et d'un témoin lumineux 14.

Les figures 1 et 2 des dessins annexés représentent un détecteur de passage comportant deux ensembles capteur infrarouge 1 et dispositif optique 2 montés dans un carter unique 3 fermé par une face avant 4. Un tel détecteur permet, par exemple, de balayer deux zones différentes de l'espace devant le détecteur, par exemple avec une inclinaison maximale de chaque dispositif optique 2 par rapport à la face avant 4 de 45°. Il en résulte que pour des dispositifs optiques 2 présentant chacun une ouverture de détection de 90°, il sera possible de balayer un espace de 180°. Dans une position desdits dispositifs optiques 2 parallèles entre eux, l'angle de détection sera minimal et limité à 90°, les zones de détection de chaque dispositif 2 se recouvrant.

Pour effectuer un réglage précis de position du ou des dispositifs optiques 2, il suffit d'actionner le secteur circulaire formant le moyen 6 d'actionnement en rotation du dispositif optique 2 dans le palier 5, de manière à positionner son marquage 6' par rapport aux marquages 8 prévus dans la fente de passage 4' ménagée dans la face avant 4 du carter 3, en face de l'angle de pivotement désiré, c'est-à-dire dans le plan bi-secteur de l'angle de détection du dispositif optique 2.

Grâce à l'invention, il est possible de réaliser un détecteur de passage pouvant être réglé rapidement et précisément par mise en oeuvre de moyens simples. Il en résulte que les zones à masquer peuvent très facilement être délimitées et qu'un changement de zones peut être réalisé de manière précise et rapide.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Détecteur de passage, essentiellement constitué par au moins un capteur infrarouge (1) coopérant avec un dispositif optique (2) de focalisation de radiations électromagnétiques, muni d'une ouverture (2') de réception desdites radiations électromagnétiques, **caractérisé en ce que** le dispositif optique (2) est relié au capteur (1) par l'intermédiaire d'un palier (5) de guidage en rotation et est pourvu d'un moyen (6) d'actionnement en rotation dans ledit palier (5), en vue du réglage précis d'une zone de détection et d'un angle de détection et **en ce que** le palier (5) de guidage en rotation du dispositif optique (2) est réalisé sous forme de deux demi-coquilles identiques pouvant être assemblées par l'intermédiaire de dispositifs à encliquetage élastiquement déformables, ces demi-coquilles enserrant, d'une part, sans possibilité de rotation, le capteur (1) et, d'autre part, avec possibilité de rotation, un disque de guidage (7) solidaire de l'extrémité correspondante du dispositif optique (2).

2. Détecteur, suivant la revendication 1, **caractérisé en ce que** le capteur (1) est intégré, par sa face opposée à celle tournée vers le dispositif optique (2), dans un circuit imprimé monté sur le fond du carter (3) de réception du capteur (1) et du dispositif optique (2) et le palier (5) de guidage en rotation du dispositif optique (2) est fixé sur ledit circuit imprimé.

3. Détecteur, suivant la revendication 1, **caractérisé en ce que** le moyen (6) d'actionnement en rotation du dispositif optique (2) dans ledit palier (5) est réalisé sous forme d'un secteur circulaire monté sur le dispositif optique, près du palier (5) de guidage en rotation, ce secteur circulaire étant muni au milieu de son bord d'un marquage (6') destiné à être positionné par rapport à des marquages (8) prévus dans une fente de passage (4') ménagée dans la face avant (4) du carter (3), ces marquages (8) étant décalés entre eux d'une valeur angulaire prédéterminée, l'angle entre les marquages extrêmes (8') correspondants au débattement angulaire maximum du dispositif optique (2).

4. Détecteur, suivant l'une quelconque des revendications 1 à 3, **caractérisé en ce qu'**il est pourvu de deux butées coopérant avec le dispositif optique (2) ou avec le moyen (6) d'actionnement en rotation, ces butées étant disposées dans le carter (3).

5. Détecteur, suivant la revendication 1, **caractérisé en ce que** le moyen (6) d'actionnement en rotation du dispositif optique (2) sous forme d'un axe de réglage solidarisé avec le dispositif optique (2) du côté opposé à un disque de guidage (7) solidaire de l'extrémité correspondante du dispositif optique (2), l'extrémité libre de cet axe de réglage traversant, en position de service, une face du carter (3) de réception de l'ensemble capteur (1) et dispositif optique (2) et étant actionnable, par exemple par l'intermédiaire d'un tournevis coopérant avec une fente prévue à cet effet dans l'extrémité libre dudit axe de réglage.

## Claims

1. Movement detector, consisting essentially of at least one infrared sensor (1) cooperating with an optical device (2) for focussing electromagnetic radiation, provided with an opening (2') for receiving said electromagnetic radiation, **characterised in that** the optical device (2) is connected to the sensor (1) by means of a rotation guide bearing (5) and is provided with a means (6) for actuating rotation in said bearing (5), for the purpose of the precise control of a detection zone and a detection angle, and **in that** the rotation guide bearing (5) of the optical device (2) is provided in the form of two identical half-shells, which can be assembled by means of elastically deformable interlocking devices, said half-shells gripping tightly, on the one hand, without any possible rotation, the sensor (1), and on the other hand, with possible rotation, a guide disc (7) connected to the corresponding end of the optical device (2).

2. Detector according to claim 1, **characterised in that** the sensor (1) is integrated, with its face opposite the one facing the optical device (2), into a printed circuit mounted on the bottom of the receiving casing (3) of the sensor (1) and the optical device (2), and the rotation guide bearing (5) of the optical device (2) is fixed onto said printed circuit.

3. Detector according to claim 1, **characterised in that** the means for actuating rotation (6) of the optical device (2) in said bearing (5) is provided in the form of a circular sector mounted on the optical device, next to the rotation guide bearing (5), said circular sector being provided in the centre of its edge with a marking (6') intended to be positioned relative to markings (8) provided in a through slot (4') arranged in the front face (4) of the casing (3), said markings (8) being offset relative to one another by a predetermined angular amount, the angle between the end markings (8') corresponding to the maximum angular displacement of the optical device (2).

4. Detector according to any one of claims 1 to 3, **characterised in that** it is provided with two stops which cooperate with the optical device (2) or with the means (6) for actuating rotation, said stops being arranged in the casing (3).

5. Detector according to claim 1, **characterised in that** the means (6) for actuating rotation of the optical device (2) is in the form of a control axis connected to the optical device (2) from the side opposite a guide disc (7) connected to the corresponding end of the optical device (2), the free end of said control axis traversing, in a position of use, a face of the receiving casing (3) of the sensor (1) and optical device (2) assembly, and being actuated for example by means of a screwdriver which cooperates with a slot provided for this purpose in the free end of said control axis.

## Patentansprüche

1. Bewegungssensor, im Wesentlichen bestehend aus mindestens einem Infrarotsensor (1), der mit einer optischen Vorrichtung (2) zur Fokussierung von elektromagnetischen Strahlen zusammenwirkt, versehen mit einer Öffnung (2') für den Empfang der genannten elektromagnetischen Strahlungen, **dadurch gekennzeichnet, dass** die optische Vorrichtung (2) mit dem Sensor (1) über ein drehbewegliches Führungslager (5) verbunden und mit einem Mittel (6) zur Drehung des genannten Lagers (5) zwecks genauer Einstellung eines Detektionsbereichs und eines Detektionswinkels versehen ist, und dass das drehbewegliche Führungslager (5) der optischen Vorrichtung (2) in Form von zwei identischen Halbschalen ausgeführt ist, die mit Hilfe von elastisch verformbaren Rastvorrichtungen zusammengesetzt werden können, wobei diese Halbschalen einerseits, ohne Drehmöglichkeit, den Sensor (1) und andererseits, mit Drehmöglichkeit, eine Führungsscheibe (7), die fest mit dem entsprechenden Ende der optischen Vorrichtung (2) verbunden ist, umschließen.

2. Bewegungssensor nach Anspruch 1, **dadurch gekennzeichnet, dass** der Sensor (1) mit der Seite, die der der optischen Vorrichtung (2) zugewandten Seite gegenüberliegt, in eine gedruckte Leiterplatte integriert ist, die am Boden des den Sensor (1) und die optische Vorrichtung (2) beherbergenden Gehäuses (3) angebracht ist, und dass das drehbewegliche Führungslager (5) der optischen Vorrichtung (2) an der genannten Leiterplatte befestigt ist.

3. Bewegungssensor nach Anspruch 1, **dadurch gekennzeichnet, dass** das Mittel (6) zur Drehung der optischen Vorrichtung (2) in dem genannten Lager (5) in Form eines kreisförmigen Segments ausgeführt ist, welches nahe des drehbeweglichen Führungslagers (5) an der optischen Vorrichtung angebracht ist, wobei dieses kreisförmige Segment in der Mitte seines Randes mit einer Markierung (6') versehen ist, die relativ zu Markierungen (8) positioniert werden kann, welche in einem Durchtrittsschlitz (4') vorgesehen sind, der in der Vorderseite (4) des Gehäuses (3) vorgesehen ist, wobei diese Markierungen (8) um einen bestimmten Winkelbetrag gegeneinander versetzt sind, wobei der Winkel zwischen den äußersten Markierungen (8') dem maximalen Schwenkwinkel der optischen Vorrichtung (2) entspricht.

4. Bewegungssensor nach einem der Ansprüche 1 bis 3, **dadurch gekennzeichnet, dass** er mit zwei Anschlägen versehen ist, die mit der optischen Vorrichtung (2) oder mit dem Mittel (6) zur Drehbetätigung zusammenwirken, wobei diese Anschläge in dem Gehäuse (3) angeordnet sind.

5. Bewegungssensor nach Anspruch 1, **dadurch gekennzeichnet, dass** das Mittel (6) zur Drehbetätigung der optischen Vorrichtung (2) in Form einer Einstellachse ausgeführt ist, die mit der optischen Vorrichtung (2) auf der Seite verbunden ist, welche einer Führungsscheibe (7) gegenüberliegt, die mit dem entsprechenden Ende der optischen Vorrichtung (2) fest verbunden ist, wobei in Betriebsstellung das freie Ende dieser Einstellachse durch eine Seite des Gehäuses (3), das die aus Sensor (1) und optischer Vorrichtung (2) bestehende Einheit beherbergt, hindurch tritt und zu betätigen ist, zum Beispiel mit Hilfe eines Schraubendrehers, der mit einem zu diesem Zweck im freien Ende der genannten Einstellachse vorgesehenen Schlitz zusammenwirkt.
